# FASCICULE DE BREVET EUROPEEN

(11) **EP 0 574 580 B1**
(45) Date de publication et mention de la délivrance du brevet: **08.11.1995**
(21) Numéro de dépôt: 93914488.7
(22) Date de dépôt: 07.01.1993
(51) Int. Cl.: B05B 7/22, B05B 7/16, C23C 4/12

(54) **BUSE COAXIALE DE TRAITEMENT SUPERFICIEL SOUS IRRADIATION LASER, AVEC APPORT DE MATERIAUX SOUS FORME DE POUDRE**
KOAXIALE DUESE ZUR LASER-OBERFLAECHENBEHANDLUNG MIT ZUFUHR VON PULVERFOERMIGEM MATERIAL
COAXIAL NOZZLE FOR SURFACE TREATMENT BY LASER BEAM, WITH SUPPLY OF MATERIALS IN POWDER FORM

(30) Priorité: 07.01.1992 FR 9200176
(43) Date de publication de la demande: 22.12.1993
(73) Titulaire: ELECTRICITE DE STRASBOURG, S.A., F-67000 Strasbourg (FR); INSTITUT REGIONAL DE PROMOTION DE LA RECHERCHE APPLIQUEE, 67100 Strasbourg (FR)
(72) Inventeur: FRENEAUX, Olivier, F-67114 Eschau (FR); POULET, Jean Bernard, F-67380 Lingolsheim (FR); LEPRE, Olivier, F-67530 Ottrott (FR); MONTAVON, Ghislain, F-70400 Granges-le-Bourg (FR)
(74) Mandataire: Nuss, Pierre
(86) Numéro de dépôt international: FR9300009
(87) Numéro de publication internationale: WO9313871

(56) Documents cités:
- WO-A-91/16146
- DE-A- 3 935 009
- FR-A- 1 192 483
- FR-A- 2 642 672
- US-A- 3 729 611
- US-A- 4 674 683
- US-A- 4 724 299

## Description

La présente invention concerne la métallurgie, plus particulièrement les techniques de traitement de surface par revêtement ou réalisation d'alliages de surface, et a pour objet une buse de traitement superficiel avec apport de matériaux sous forme de poudre sous irradiation laser, de type coaxial. Une telle buse est décrite dans les documents FR-A-2 642 672 et WO-A-91/16146

Le mode de fonctionnement d'une telle buse coaxiale consiste à injecter dans un faisceau laser de forte puissance traversant ladite buse, un ou des matériaux sous forme de poudre, également appelés matériaux de rechargement, véhiculé par un fluide, afin de réaliser, après fusion desdits matériaux, une couche de revêtement superficiel sur la pièce à traiter en assurant une excellente adhérence par refusion intime de la surface de ladite pièce, ou un alliage de surface par refusion profonde et contrôlée avec le matériau constituant ladite pièce.

Ce type de buse présente une structure permettant le libre passage du faisceau laser et l'amenée de matériaux sous forme de poudre de manière périphérique, autorisant des traitements multi-axiaux, suivant les trois dimensions spatiales.

Néanmoins, la qualité du traitement obtenue par l'intermédiaire d'une telle buse dépend notamment de la quantité et des propriétés intrinsèques de la poudre amenée dans le faisceau laser incident et de son interaction avec ledit faisceau, ainsi que de la forme du jet résultant à la sortie de la buse.

En outre, la possibilité de mettre en forme le jet à la sortie de la buse permet, d'une part, de faire varier différents paramètres de traitement tels que la zone d'application, et l'intensité du traitement, la répartition des particules dans la zone d'impact, etc., et, d'autre part, d'augmenter le rendement calorimétrique de l'opération, en couplant de façon optimale le jet de matériaux de rechargement avec le faisceau laser incident.

Or, actuellement, les matériaux de rechargement sont généralement injectés dans le faisceau laser de manière empirique, sans mettre en oeuvre des dispositifs d'amenée spécifiques, ni présenter des moyens de mise en forme du jet émis. Il en résulte qu'une part importante des matériaux de rechargement n'est pas irradiée par le faisceau laser incident et n'intervient donc pas dans le traitement de surface réalisé. De plus, la forme du jet ainsi que la répartition des particules dans ledit jet, dépendant directement du dispositif d'injection de matériaux de rechargement, ne peut, en aucun cas, être contrôlée.

La présente invention a pour but de pallier l'ensemble des inconvénients précités.

A cet effet, elle a pour objet une buse coaxiale de traitement superficiel sous irradiation laser, avec apport de matériaux sous forme de poudre, constituée, d'une part, par un corps de buse pourvu d'un passage tronconique effilé en direction de la sortie de la buse suivant l'axe de propagation du faisceau laser et, d'autre part, par un dispositif d'injection coaxiale, de guidage et de mise en forme d'un jet de matériaux, sous forme de poudre, véhiculés par un fluide de transport dans ledit corps de buse et, enfin, par un dispositif d'injection d'un fluide de confinement en surpression ou de génération d'une dépression dans ladite buse de traitement, caractérisée en ce que le dispositif (14) se présente sous la forme d'une seconde bague de cloisonnement tronconique s'étendant, de manière coaxiale, dans la première bague de cloisonnement, en vue d'améliorer l'interaction entre le faisceau laser incident et les matériaux sous forme de poudre.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale et en coupe d'une buse de traitement conforme a' l'invention;
la figure 2 est une vue en coupe selon A-A de la buse de traitement représentée partiellement à la figure 1;
la figure 3 est une vue en coupe selon B-B de la buse de traitement représentée partiellement à la figure 1, suivant une variante de réalisation de l'invention, et,
les figures 4, 5 et 6 sont des photographies des jets émis par la buse de traitement selon l'invention.

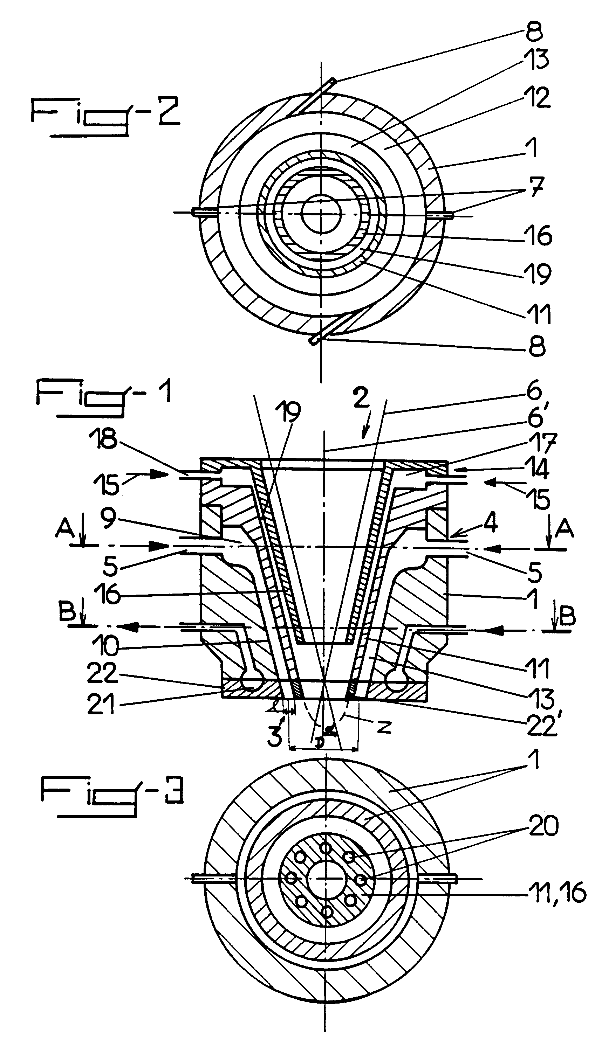

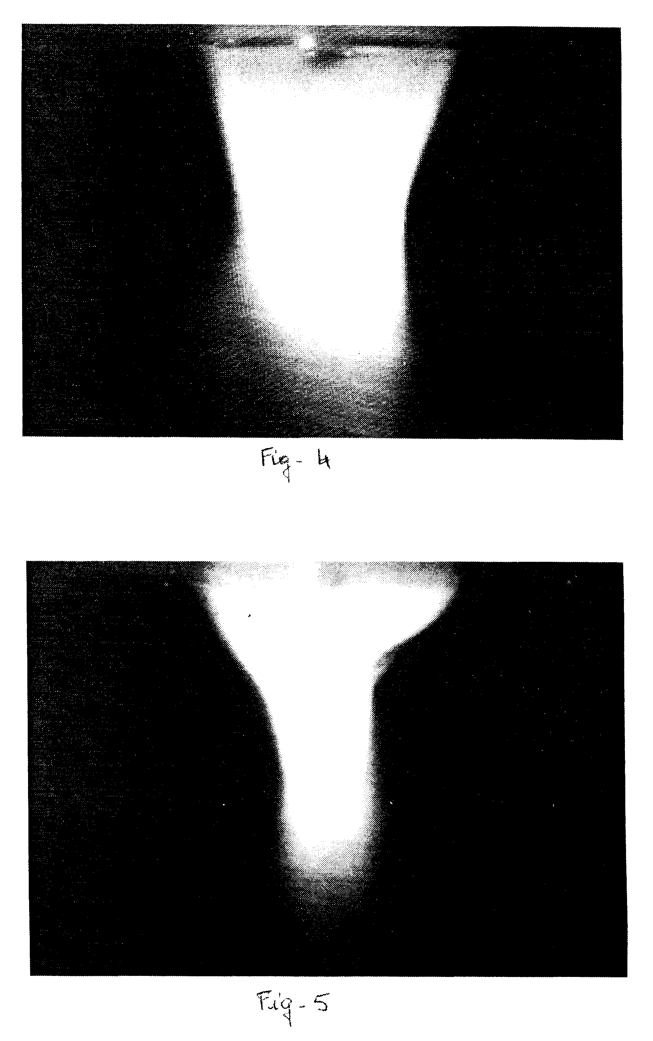

Conformément à l'invention, et comme le montre notamment la figure 1 des dessins annexés, la buse de traitement est constituée, d'une part, par un corps de buse 1 pourvu d'un passage tronconique 2 effilé en direction de la sortie de la buse 3 suivant l'axe de propagation 6' du faisceau laser 6 et, d'autre part, par un dispositif 4 d'injection coaxiale, de guidage et de mise en forme d'un jet de matériaux 5 sous forme de poudre véhiculé par un fluide de transport dans ledit corps de buse 1 et, enfin, par un dispositif 14 d'injection d'un fluide de confinement 15 en surpression ou de génération d'une dépression dans ladite buse de traitement, se présentant sous la forme d'une seconde bague de cloisonnement tronconique 16 s'étendant, de manière coaxiale, dans la première bague de cloisonnement 11 , en vue d'améliorer l'interaction entre le faisceau laser incident 6 et les matériaux 5 sous forme de poudre injectés et de permettre l'épanouissement du faisceau laser.

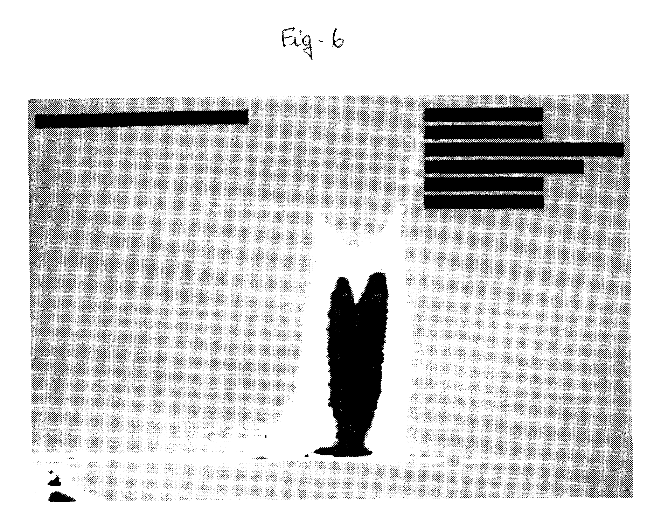

Selon une caractéristique de l'invention, représentée aux figures 1 et 2 des dessins annexés, le dispositif 4 d'injection coaxiale et de guidage est principalement composé d'un ou plusieurs orifices 7, 8 d'injection tangentielle et/ou radiale débouchant dans une chambre d'injection 9 délimitée par la paroi interne 10 du corps de buse 1 et d'une bague de cloisonnement 11 tronconique, montée sur le corps de buse 1 et disposée de manière coaxiale, dans le passage 2 dudit corps de buse 1.

La chambre d'injection 9 comprend, avantageusement, une chambre circonférentielle 12 d'homogénéisation dans laquelle aboutissent les orifices 7, 8 d'injection, prolongée par un espace annulaire tronconique 13 pour le guidage du matériau 5 sous forme de poudre injecté, débouchant à proximité de la sortie de buse 3.

Ainsi, les matériaux 5 de rechargement véhiculés par un fluide de transport sont amenés à proximité immédiate du faisceau laser 6 et sont introduits de manière circonférentielle et uniforme dans celui-ci permettant de constituer une surface d'interface maximale et de favoriser au mieux l'intégration du jet de matériaux 5 dans le faisceau laser 6.

En outre, la répartition des matériaux 5 sous forme de poudre dans le fluide de transport est uniformisée du fait de leur passage dans la chambre circonférentielle 12, favorisant l'interaction entre le jet diphasique de matériaux 5 émis et le faisceau laser incident 6 et augmentant, par conséquent, la qualité du traitement réalisé.

Comme le montre plus particulièrement la figure 2 des dessins annexés, le dispositif 4 d'injection coaxiale et de guidage comporte, préférentiellement, deux orifices 7 d'injection tangentielle et deux orifices 8 d'injection radiale, répartis de manière uniforme et en opposition deux à deux sur le pourtour du corps de buse 1.

La possibilité de pouvoir mettre en oeuvre, alternativement, soit un mode d'injection radiale, soit un mode d'injection tangentielle, ce en fonction notamment de la nature ou du débit massique des matériaux 5 sous forme de poudre, permet de modifier dans de larges proportions la morphologie du jet de matériaux 5 issu de la buse de traitement et de la distribution des particules en son sein.

La géométrie de la buse de traitement conforme à l'invention peut être caractérisée, pour l'essentiel, par les valeurs de demi-angle α du cône d'éjection, du diamètre moyen D de l'anneau d'injection et de la largeur l dudit anneau, déterminées par la taille et la configuration du passage tronconique 2 du corps de buse 1 et de la bague de cloisonnement 11 (Figure 1).

Une interaction optimale entre le jet de matériaux 5 sous forme de poudre et le faisceau laser incident 6 a été obtenue, pour la buse de traitement représentée à la figure 1 des dessins annexés, pour une valeur de demi-angle du cône d'injection α comprise entre 15° et 20°, préférentiellement égale à 17°, une valeur de diamètre moyen de l'anneau d'injection D comprise entre 4 millimètres et 10 millimètres, préférentiellement égale à 7 millimètres, et une largeur l d'anneau d'injection comprise entre 0,5 millimètre et 2,0 millimètres, préférentiellement égale à 0,8 millimètre.

En outre, et conformément à une autre caractéristique de l'invention, le fluide de transport est avantageusement un gaz, préférentiellement inerte tel que l'hélium ou l'argon afin d'éliminer les risques de plasma nuisible au bon fonctionnement et assurer une bonne protection gazeuse contre l'oxydation du revêtement réalisé. Leur débit volumique, dans les conditions standards, est compris entre 1,5 x 10⁻⁵ et 35 x 10⁻⁵ m³/s, ce en fonction de la nature des matériaux 5.

A titre d'exemple, lorsque les matériaux 5 consistent en des particules de matériau connu sous la désignation Stellite grade 6, ce dernier peut avantageusement être appliqué sur un subjectile par l'intermédiaire d'une buse de traitement présentant un demi-angle de cône d'injection de l'ordre de 17° et un diamètre moyen de l'anneau d'injection de l'ordre de 7 mm, l'épaisseur de l'anneau d'injection étant de 0,8 mm. Dans ce cas, le fluide de transport est préférentiellement de l'argon présentant un débit volumique de 6 x 10⁻⁵ m³/s.

Afin de pouvoir modifier la morphologie du jet de matériau 5 à la sortie de la buse 3 au cours d'une opération de traitement, en agissant, d'une part sur la zone Z dite "zone morte", située à proximité de la sortie de la buse 3 et caractérisée par une vitesse d'écoulement nulle, et d'autre part, sur les conditions d'écoulement en jet libre par réduction des dimensions du jet et homogénéisation des vitesses d'écoulement du matériau, la buse de traitement selon l'invention comporte un dispositif 14 d'injection d'un fluide de confinement 15 en surpression ou de génération d'une dépression dans ladite buse de traitement, permettant de mettre en forme le jet de matériaux 5 résultant indépendamment de la configuration géométrique de ladite buse de traitement et d'optimiser l'interaction entre les matériaux 5 sous forme de poudre injectés et le faisceau laser 6, par réduction de ladite "zone morte" et modification de la nature des écoulements.

Ce dispositif 14 se présentant, essentiellement, comme le montre la figure 1 des dessins annexés, sous la forme d'une seconde bague de cloisonnement 16 tronconique montée sur et dans la buse de traitement et s'étendant essentiellement, de manière coaxiale, dans la première bague de cloisonnement 11, délimite et comprend une chambre de confinement 17 circonférentielle, reliée à des orifices d'injection 18 et prolongée par un espace de guidage 19, de structure tronconique, débouchant non loin de la sortie de la buse 3 à l'intérieur de la première bague de cloisonnement 11.

L'injection, sous des pressions et des débits donnés, d'un fluide de confinement 15, par exemple un gaz, ou la génération par aspiration d'une dépression d'intensité donnée dans la buse de traitement, par l'intermédiaire du dispositif 14 entraîne une focalisation du jet de matériau 5 à la sortie de la buse 3 dans le faisceau laser 6 et une limitation de la dispersion des particules de matériaux 5 hors dudit faisceau.

L'influence de la mise en oeuvre du dispositif 14 est nettement visible sur les figures 4 à 6 des dessins annexés qui représentent la morphologie d'un jet de matériaux 5 obtenu à la sortie d'une buse de traitement, respectivement, sans mise en oeuvre du dispositif 14 (Fig. 4) et avec injection d'un fluide de confinement 15 en surpression (Fig. 5) ou en dépression (Fig. 6).

Conformément à une caractéristique de l'invention, les première et seconde bagues de cloisonnement 11 et 16 peuvent être réalisées d'une seule pièce, l'espace de guidage 19 tronconique pouvant se présenter sous la forme d'une pluralité de canaux 20 s'étendant entre les deux bagues de cloisonnement 11 et 16 (Figure 3).

Selon une variante de réalisation de l'invention, représentée à la figure 2 des dessins annexés, l'espace de guidage 19 tronconique se présente sous la forme d'un espace annulaire continu s'étendant entre les deux bagues de cloisonnement 11 et 16.

En vue de limiter la montée en température de la buse de traitement, le corps de buse 1 est pourvu, dans sa partie inférieure près de la sortie de la buse 3, d'une cavité ou d'un conduit annulaire circonférentiel 21 parcouru par un liquide de refroidissement.

Conformément à une caractéristique supplémentaire de l'invention, représentée à la figure 1 des dessins annexés, la bague de cloisonnement et/ou le corps de buse 1 comportent des embouts amovibles 22, 22', réalisés en un matériau pouvant résister à des contraintes thermiques importantes.

Grâce a' l'invention, il est donc possible de réaliser une buse coaxiale de traitement superficiel sous irradiation laser, avec apport de matériaux sous forme de poudre permettant de réaliser des traitements multidirectionnels variables et contrôlés, en optimisant l'interaction entre les matériaux sous forme de poudre injectés et le faisceau laser 6 et en mettant en forme le jet résultant en fonction du traitement à réaliser.

Bien entendu, l'invention n'est pas limitée aux modes de réalisation décrits et représentés aux dessins annexés. Des modifications restent possibles, notamment du point de vue de la constitution des divers éléments, ou par substitution des divers éléments, ou par substitution d'équivalents techniques, sans sortir pour autant du domaine de protection de l'invention.

## Revendications

1. Buse coaxiale de traitement superficiel sous irradiation laser, avec apport de matériaux sous forme de poudre, constituée, d'une part, par un corps de buse (1) pourvu d'un passage tronconique (2) effilé en direction de la sortie de la buse (3) suivant l'axe de propagation (6') du faisceau laser (6), d'autre part, par un dispositif (4) d'injection coaxiale et de guidage et de mise en forme d'un jet de matériaux (5) sous forme de poudre véhiculés par un fluide de transport dans ledit corps de buse (1), comprenant une bague de cloisonnement (11) tronconique montée dans le corps de buse (1), et, enfin, par un dispositif (14) d'injection d'un fluide de confinement (15) en surpression ou de génération d'une dépression dans ladite buse de traitement pour focaliser le jet de matériaux (5) à la sortie de la buse (3) dans le faisceau laser, caractérisée en ce que ce dispositif se présente sous la forme d'une seconde bague de cloisonnement (16) tronconique s'étendant, de manière coaxiale, dans la première bague de cloisonnement (11), en vue d'améliorer l'interaction entre le faisceau laser incident (6) et les matériaux (5) sous forme de poudre.

2. Buse selon la revendication 1, caractérisée en ce que le dispositif (4) d'injection coaxiale et de guidage est principalement composé d'un ou plusieurs orifices (7, 8) d'injection tangentielle et/ou radiale débouchant dans une chambre d'injection (9) délimitée par la paroi interne (10) du corps de buse (1) et la bague de cloisonnement (11) tronconique, disposée, de manière coaxiale, dans le passage (2) du corps de buse (1).

3. Buse selon la revendication 2, caractérisée en ce que la chambre d'injection (9) comprend une chambre circonférentielle (12) d'homogénéisation dans laquelle aboutissent les orifices (7, 8) d'injection, prolongée par un espace annulaire tronconique (13) pour le guidage des matériaux (5) sous forme de poudre injectés, débouchant à proximité de la sortie de buse (3).

4. Buse selon l'une quelconque des revendications 2 et 3, caractérisée en ce que le dispositif (4) d'injection coaxiale et de guidage comporte, préférentiellement, deux orifices (7) d'injection tangentielle et deux orifices (8) d'injection radiale, répartis de manière uniforme et en opposition deux à deux sur le pourtour du corps de buse (1).

5. Buse selon l'une quelconque des revendications 2 à 4, caractérisée en ce qu'elle présente une valeur de demi-angle du cône d'injection (α) comprise entre 15° et 20°, préférentiellement égale à 17°, une valeur de diamètre moyen de l'anneau d'injection (D) comprise entre 4 millimètres et 10 millimètres, préférentiellement égale à 7 millimètres, et une largeur (l) d'anneau d'injection comprise entre 0,5 millimètre et 2,0 millimètres, préférentiellement égale à 0,8 millimètre.

6. Buse selon la revendication 5, caractérisée en ce que le fluide de transport est un gaz, préférentiellement inerte tel que l'hélium ou l'argon, afin d'éliminer les risques de plasma nuisible au bon fonctionnement et assurer une bonne protection gazeuse contre l'oxydation du revêtement réalisé, leur débit volumique, dans les conditions standards, étant compris entre 1,5 x 10⁻⁵ et 35 x 10⁻⁵ m³/s.

7. Buse selon l'une quelconque des revendications 1 à 6, caractérisée en ce que le dispositif (14) comprend une chambre de confinement (17) circonférentielle, réliée à des orifices d'injection (18) et prolongée par un espace de guidage (19), de structure tronconique, débouchant non loin de la sortie de buse (3), à l'intérieur de la première bague de cloisonnement (11), permettant de mettre en forme le je! de matériaux (5) résultant, indépendamment de la configuration géométrique de la buse de traitement, et d'optimiser l'interaction entre les matériaux (5), sous forme de poudre, injectés et le faisceau laser (6), par réduction de la "zone morte" et modification de la nature des écoulements.

8. Buse selon l'une quelconque des revendications 1 à 7, caractérisée en ce que les première et seconde bagues de cloisonnement (11 et 16) sont réalisées d'une seule pièce.

9. Buse selon l'une quelconque des revendications 7 et 8, caractérisée en ce que l'espace de guidage (19) tronconique se présente soit sous la forme d'un espace annulaire continu, soit sous la forme d'une pluralité de canaux (20) , s'étendant entre les deux bagues de cloisonnement (11 et 16) éventuellement réalisées d'une seule pièce.

10. Buse selon l'une quelconque des revendications 1 à 9, caractérisée en ce que le corps de buse (1) est pourvu, dans sa partie inférieure près de la sortie de la buse (3), d'un conduit annulaire circonférentiel (21) parcouru par un liquide de refroidissement.

11. Buse selon l'une quelconque des revendications 1 à 10, caractérisée en ce que la bague de cloisonnement (11) et/ou le corps de buse (1) comportent des embouts amovibles (22, 22'), réalisés en un matériau pouvant résister à des contraintes thermiques importantes.

## Claims

1. Coaxial nozzle for surface treatment by laser irradiation, with supply of materials in powder form, consisting, on the one hand, of a nozzle body (1) provided with a truncated cone-shaped passage (2) tapering in the direction of the nozzle outlet (3) along the axis of propagation (6') of the laser beam (6) and, on the other hand, of a device (4) for the coaxial injection, guidance and shaping of a jet of powder-form materials (5) transported by a conveying fluid in said nozzle body (1), comprising a truncated cone-shaped partitioning ring (11) mounted in the nozzle body (1) and, finally, of a device (14) for injecting a containment fluid (15) at excess pressure or for generating a reduced pressure in said treatment nozzle in order to concentrate the jet of materials (5) at the outlet of the nozzle (3) in the laser beam, characterised in that this device has the form of a second truncated cone-shaped partitioning ring (16) extending coaxially in the first partitioning ring (11) in order to improve the interaction between the incident laser beam (6) and the powder-form materials (5).

2. Nozzle according to Claim 1, characterised in that the device (4) for coaxial injection and guidance is mainly composed of one or more orifices (7, 8) for tangential and/or radial injection opening into an injection chamber (9) limited by the internal wall (10) of the nozzle body (1) and the truncated cone-shaped partitioning ring (11) arranged coaxially in the passage (2) of the nozzle body (1).

3. Nozzle according to Claim 2, characterised in that the injection chamber (9) comprises a circumferential homogenisation chamber (12) in which the injection orifices (7, 8) end and which is extended by a truncated cone-shaped annular space (13) for guiding the injected powder-form materials (5), opening in the vicinity of the nozzle outlet (3).

4. Nozzle according to any one of Claims 2 and 3, characterised in that the coaxial injection and guidance device (4) preferably comprises two tangential injection orifices (7) and two radial injection orifices (8) distributed uniformly and in opposition in pairs on the periphery of the nozzle body (1).

5. Nozzle according to any one of Claims 2 to 4, characterised in that it has an injection cone half-angle value (α) of between 15° and 20°, preferably of 17°, a mean diameter value of the injection ring (D) of between 4 millimetres and 10 millimetres, preferably of 7 millimetres, and an injection ring width (l) of between 0.5 millimetre and 2.0 millimetres, preferably of 0.8 millimetre.

6. Nozzle according to Claim 5, characterised in that the conveying fluid is a gas, preferably an inert gas such as helium or argon, in order to eliminate the risks of plasma which is harmful to perfect operation and to ensure good gaseous protection against oxidation of the coating produced, their volumetric flow rate under standard conditions being between 1.5 x 10⁻⁵ and 35 x 10⁻⁵ m³/s.

7. Nozzle according to any one of Claims 1 to 6, characterised in that the device (14) comprises a circumferential containment chamber (17) connected to injection orifices (18) and extended by a guidance space (19) having a truncated cone-shaped structure and opening not far from the nozzle outlet (3), inside the first containment ring (11) allowing the resultant jet of material (5) to be shaped independently of the geometric configuration of the treatment nozzle and allowing the interaction between the injected powder-form materials (5) and the laser beam (6) to be optimized by reduction of the "dead zone" and modification of the nature of the outflows.

8. Nozzle according to any one of Claims 1 to 7, characterised in that the first and second partitioning rings (11 and 16) are produced from a single part.

9. Nozzle according to any one of Claims 7 and 8, characterised in that the truncated cone-shaped guiding space (19) has the form of a continuous annular space either in the form of a plurality of channels (20) extending between the two partitioning rings (11 and 16) optionally produced from a single part.

10. Nozzle according to any one of Claims 1 to 9, characterised in that the nozzle body (1) is provided, in its lower portion close to the nozzle outlet (3), with a circumferential annular conduit (21) traversed by a cooling liquid.

11. Nozzle according to any one of Claims 1 to 10, characterised in that the partitioning ring (11) and/or the nozzle body (1) comprise removable fittings (22, 22') produced from a material capable of withstanding significant thermal stresses.

## Patentansprüche

1. Koaxiale Düse zur Laser-Oberflächenbehandlung unter Zufuhr von pulverförmigen Materialien, welche aufweist: zum einen ein Düsengehäuse (1), welches mit einem kegelstumpfförmigen Durchgang (2) versehen ist, der sich in Richtung zum Düsenauslaß (3) hin längs der Fortpflanzungsrichtung (6') des Laser-Bündels (6) verjüngt, zum anderen eine koaxiale Einrichtung (4) zum Einspritzen, Führen und Formgeben eines Strahles (5) von in Pulverform vorliegenden Materialien, welche durch ein Transportfluid in das Düsengehäuse (1) gefördert werden, welche Einrichtung einen kegelstumpfförmigen Trennring (11) aufweist, der in dem Düsengehäuse (1) angebracht ist, und schließlich eine Einrichtung (14) zum Einspritzen eines unter Überdruck stehenden Einschließfluids (15) in die Behandlungsdüse oder zum Erzeugen eines Unterdrucks in der Behandlungsdüse, um den Strahl (5) von Materialien auf den Düsenauslaß (3) in das Laserbündel zu fokussieren, dadurch gekennzeichnet, daß diese Einrichtung die Form eines zweiten kegelstumpfförmigen Trennringes (16) aufweist, der sich koaxial im ersten Trennring (11) erstreckt, um die Wechselwirkung zwischen dem einfallenden Laserbündel (6) und den in Pulverform vorliegenden Materialien (5) zu verbessern.

2. Düse nach Anspruch 1, dadurch gekennzeichnet, daß die koaxiale Einrichtung (4), die zum Einspritzen und Führen dient, in erster Linie durch eine oder mehrere Einspritzöffnungen (7, 8) gebildet ist, welche sich in tangentialer und/oder radialer Richtung erstrecken und in eine Injektionskammer (9) ausmünden, welche durch die innenliegende Wand (10) des Düsengehäuses (1) und den kegelstumpfförmigen Trennring (11) begrenzt ist, welcher koaxial in dem Durchgang (2) des Düsengehäuses (1) angeordnet ist.

3. Düse nach Anspruch 2, dadurch gekennzeichnet, daß die Injektionskammer (9) eine in Umfangsrichtung verlaufende Homogenisierungskammer (12) umfaßt, in welcher die Einspritzöffnungen (7, 8) enden und welche durch einen ringförmigen kegelstumpfförmigen Raum (13) verlängert ist, der zum Führen der eingespritzten in Pulverform vorliegenden Materialien (5) dient und in der Nachbarschaft des Düsenauslasses (3) ausmündet.

4. Düse nach einem der Ansprüche 2 und 3, dadurch gekennzeichnet, daß die koaxiale Einrichtung (4) zum Einspritzen und Führen vorzugsweise zwei tangentiale Einspritzöffnungen (7) und zwei radiale Einspritzöffnungen (8) aufweist, die gleichförmig und einander paarweise gegenüberliegend auf dem Umfang des Düsengehäuses (1) verteilt sind.

5. Düse nach einem der Ansprüche 2 bis 4, dadurch gekennzeichnet, daß die Größe des halben Öffnungswinkels (α) des Einspritzkegels zwischen 15° und 20° liegt, vorzugsweise gleich 17° ist, daß der mittlere Durchmesser des Einspritzringes (D) zwischen 4 mm und 10 mm liegt, vorzugsweise gleich 7 mm ist, und daß die Breite (l) des Einspritzringes zwischen 0,5 mm und 2,0 mm liegt, vorzugsweise gleich 0,8 mm ist.

6. Düse nach Anspruch 5, dadurch gekennzeichnet, daß das Transportfluid ein Gas ist, vorzugsweise ein inertes Gas wie z. B. Helium oder Argon, um die Gefahr einer Plasmabildung auszuräumen, welche sich nachteilig auf das gute Arbeiten auswirkt, und um eine gute durch Gase vermittelte Schutzwirkung gegen ein Oxydieren des hergestellten Überzuges zu gewährleisten, wobei der Volumendurchsatz gemessen unter Standardbedingungen zwischen 1,5 x 10⁻⁵ und 35 x 10⁻⁵ m³/s liegt.

7. Düse noch einem der Ansprüche 1 bis 6, dadurch gekennzeichnet, daß die Einrichtung (14) eine in Umfangsrichtung verlaufende Einschließkammer (17) aufweist, welche mit Einspritzöffnungen (18) verbunden ist und an welche sich als Verlängerung ein kegelstumpfförmige Geometrie aufweisender Führungsraum (19) anschließt, der nicht weit vom Düsenauslaß (3) im Inneren des ersten Trennringes (11) ausmündet, wodurch man die Formgebung des erhaltenen Strahles aus Materialien unabhängig von der geometrischen Gestalt der Behandlungsdüse vornehmen kann und die Wechselwirkung zwischen den eingespritzten in Pulverform vorliegenden Materialien (5) und dem Laserbündel (6) verbessern kann, indem man den "toten Bereich" verkleinert und die Eigenschaften der Strömungen abändert.

8. Düse nach einem der Ansprüche 1 bis 7, dadurch gekennzeichnet, daß der erste und zweite Trennring (11 und 16) durch ein einziges Bauteil gebildet sind.

9. Düse nach einem der Ansprüche 7 und 8, dadurch gekennzeichnet, daß der kegelstumpfförmige Führungsraum (19) entweder in Form eines durchgehenden Ringraumes vorgesehen ist oder in Form einer Mehrzahl von Kanälen (20) vorgesehen ist, welche sich zwischen den beiden Trennringen (11 und 16) erstrecken, die eventuell durch ein einziges Bauteil gebildet sind.

10. Düse nach einem der Ansprüche 1 bis 9, dadurch gekennzeichnet, daß das Düsengehäuse (1) in seinem unteren Abschnitt in der Nachbarschaft des Auslasses (3) der Düse mit einer in Umfangsrichtung verlaufenden ringförmigen Leitung (21) versehen ist, durch welche eine Kühlflüssigkeit hindurchströmt.

11. Düse nach einem der Ansprüche 1 bis 10, dadurch gekennzeichnet, daß der Trennring (11) und/oder das Düsengehäuse (1) abnehmbare Anschlüsse (22, 22') aufweisen, die aus einem Material hergestellt sind, welches starken themischen Belastungen standhalten kann.
